# EUROPEAN PATENT APPLICATION

(11) **EP 2 199 977 A1**
(43) Date of publication of application: **23.06.2010**
(21) Application number: 09165119.0
(22) Date of filing: 10.07.2009
(51) Int. Cl.: G06T 7/00

(54) **Method and apparatus for creating a virtual space**

(30) Priority: 14.07.2008 FI 20085727
(71) Applicant: Tuvendo Oy, 00340 Helsinki (FI)
(72) Inventor: Soinila, Jukka, 00340 HELSINKI (FI)
(74) Representative: Brax, Matti Juhani

(57) **Abstract**

In a method for creating a three-dimensional virtual space, a display means is used to show (501) a view image of said virtual space visible to the virtual observer, said view image is updated (502) to correspond to a situation in which the virtual objects in said virtual space have been moved (503) according to what the parameter settings related to the virtual objects indicate as the ways of moving allowed for said virtual objects. The method is based on the fact that all ways of moving that are possible in theory are not sensible in practice. Parameters associated with the virtual objects make it possible to restrict the possibilities of moving different virtual objects in a virtual space, and therefore the computing capacity required for updating the view image is reduced. In addition, the set of parameters related to different virtual objects forms a compact database, which defines the operations that are possible in the virtual space and can be easily transferred from one apparatus to another.

## Description

### Field of the invention

The invention relates to a method and apparatus for creating a three-dimensional virtual space to be presented on a display means. The invention also relates to a computer program for creating a three-dimensional virtual space for presentation on a display means.

### Background of the invention

A three-dimensional virtual space can be used to simulate a corresponding three-dimensional real space, such as a room or a certain part of an open space, such as a golf course or the like. The display means is used to present a view image, which simulates a view that would be seen in a corresponding real space. Said display means can be, for example, an LCD or CBT display (Liquid Crystal Display, Cathode Beam Tube) or a system formed by a projector and a screen. Said view image is updated according to the movement of the virtual objects and other virtual beings presented in said three-dimensional virtual space. Said virtual objects and other beings simulate real objects and beings that would be included in a real space corresponding to said virtual space. Said movement can mean shifting or rotating or a combination thereof. In this document, the term "shifting" means the changing of a location that can be expressed by a system of coordinates fixed to said virtual space without the virtual object or other virtual being turning in relation to the coordinates. Similarly, in this document the term "rotating" means the revolving or turning of the virtual object or other virtual being around a line which runs through a predetermined point of said virtual object or other virtual being. Said view image is preferably also updated according to how the virtual observer representing the observer moves (shifts and/or rotates) in said virtual space. Said virtual observer can be moved as an object, or virtual body, which is shown as a virtual object in said virtual space. The virtual body can be called an "avatar", a term which is often used to mean the visual presentation of an object selected by the user in the Internet. Said virtual observer is not necessarily only an observer and watcher, but also an actor who can, for example, open a virtual safe in the virtual space or perform some other action. In addition, the apparatus arranged for producing the virtual space may contain sound reproduction apparatus, by which the sound effects related to each situation in the virtual space can be produced.

Substantial calculation and processing capacity is often needed for the production and processing of a three-dimensional virtual space especially when said virtual space contains many virtual objects and/or other virtual beings which can move (rotate and shift) and which can be moved (rotated and shifted) in an arbitrary manner in said virtual space. The requirements for calculation and processing capacity retard the propagation of applications based on virtual space, because the required apparatus is often expensive. Moreover, the data structure that describes said virtual objects and/or other virtual beings becomes large, complicated, and difficult to transfer between different apparatuses.

### Summary of the invention

The invention relates to a new kind of method for creating a three-dimensional virtual space. The method according to the invention includes the following steps:
- showing on a display means a view image of said three-dimensional virtual space visible to the virtual observer,
- moving at least one virtual object in said three-dimensional virtual space in accordance with what at least one moving parameter associated with said at least one virtual object is arranged to indicate as the way of moving allowed for said at least one virtual object, and
- updating said view image to correspond to a situation in which said at least one virtual object has been moved in said three-dimensional virtual space.

Said at least one motion parameter can indicate, for example, one or more of the following allowed ways of moving:
- rotating said virtual object around a line having a predetermined direction in said three-dimensional virtual space and running through a predetermined point of said virtual object, is allowed,
- rotating said virtual object around a line having an arbitrary direction but running through a predetermined point of said virtual object, is allowed,
- shifting said virtual object on a predetermined plane of said three-dimensional virtual space is allowed,
- shifting said virtual object in a predetermined subspace of said three-dimensional virtual space is allowed, and
- unlimited moving of said virtual object in said three-dimensional virtual space is allowed.

The method according to the invention is based on the fact that all ways of moving that are possible in theory are not sensible in practice. For example, a chair in a room is generally moved only in the direction of a plane determined by the floor of said room and rotated only around a line that is perpendicular in relation to said floor. Thus it is not necessary to allow a virtual chair in a virtual space to be moved in an unlimited manner in a virtual three-dimensional space belonging to said virtual space. By means of moving parameters associated with the virtual objects it is possible to limit the possibilities as to how different virtual objects can be moved in a virtual space, and therefore the calculation capacity required for updating the view image is reduced. In addition, the set of parameters associated with different virtual objects forms a database that defines the possible moving operations directed to the virtual objects and can easily be transferred from one apparatus to another one.

The invention also relates to a new kind of apparatus for creating a three-dimensional virtual space. The apparatus according to the invention has a processor system, which is arranged:
- to show on a display means a view image of said three-dimensional virtual space visible to the virtual observer,
- to move at least one virtual object in said three-dimensional virtual space in accordance with what the at least one moving parameter associated with said at least one virtual object is arranged to indicate as the way of moving allowed for said at least one virtual object, and
- to update said view image to correspond to the situation in which said at least one virtual object has been moved in said three-dimensional virtual space.

The invention also relates to a new kind of computer program for creating a three-dimensional virtual space. The computer program according to the invention includes instructions executable by a programmable processor for directing said programmable processor:
- to show on a display means a view image of said three-dimensional virtual space visible to the virtual observer,
- to move at least one virtual object in said three-dimensional virtual space in accordance with what the at least one moving parameter associated with said at least one virtual object is arranged to indicate as the way of moving allowed for said at least one virtual object, and
- to update said view image to correspond to a situation in which said at least one virtual object has been moved in said three-dimensional virtual space.

Said computer program may be, for example, saved in a storage medium readable by a processor or coded into a signal which can be received from a communication network.

The various embodiments of the invention are characterized in what is set forth in the dependent claims.

### Brief description of the drawings

The embodiments and advantages of the invention will be described in more detail in the following, with reference to the embodiments presented as examples and the accompanying figures, in which
Fig. 1 shows an example of a system with apparatus according to an embodiment of the invention for creating a three-dimensional virtual space,
Figs. 2a and 2b show view images of a three-dimensional virtual space created by the apparatus according to an embodiment of the invention in exemplary situations,
Figs. 3a and 3b show view images of a three-dimensional virtual space created by the apparatus according to an embodiment of the invention in exemplary situations,
Fig. 4 shows a view image of a three-dimensional virtual space created by the apparatus according to an embodiment of the invention in an exemplary situation, and
Fig. 5 shows s flow chart of a method according to an embodiment of the invention for creating a three-dimensional virtual space.

### Description of the embodiments of the invention

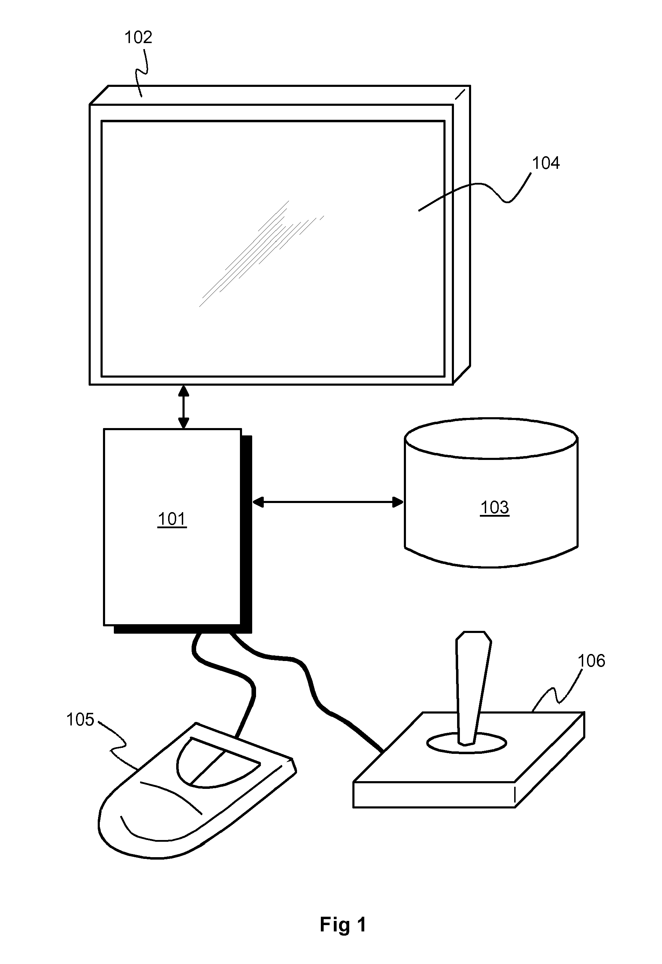

Fig. 1 shows an example of a system with apparatus according to an embodiment of the invention for creating a three-dimensional virtual space. The apparatus has a processor system 101, which may consist of one or more processor units and which may have an internal memory medium or a connection interface for connecting to an external memory medium 103. The processor system 101 preferably has connection interfaces for connecting to control means. Said control means may contain, for example, a mouse controller 105, a joystick 106 and/or other control means, such as a keyboard. The processor system 101 is arranged to present on the display screen 104 of the display means 102 a view image of said three-dimensional virtual space visible to the virtual observer. Said display means can be, for example, an LCD or CBT display (Liquid Crystal Display, Cathode Beam Tube). It is also possible to use a projector and a screen or some other suitable apparatus as the display means. The processor system 101 is arranged to move at least one virtual object in said three-dimensional virtual space in accordance with what the at least one motion parameter associated (or logically connected) with said at least one virtual object is arranged to indicate as the way of moving allowed for said at least one virtual object. The processor system 101 is arranged to update said view image to correspond to a situation in which at least one virtual object located in said three-dimensional virtual space has been moved. By means of motion parameters associated with the virtual objects it is possible to limit the possibilities as to how different virtual objects can be moved in a virtual space, and therefore the calculation capacity required for updating the view image is reduced. In addition, the set of parameters associated with different virtual objects forms a database that defines the possible moving operations directed to the virtual objects and can easily be transferred from one apparatus to another one.

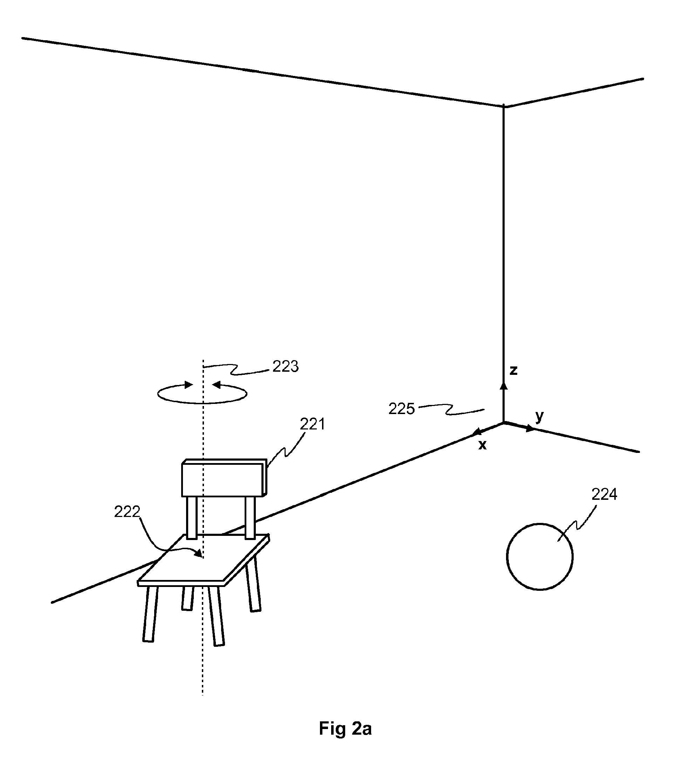

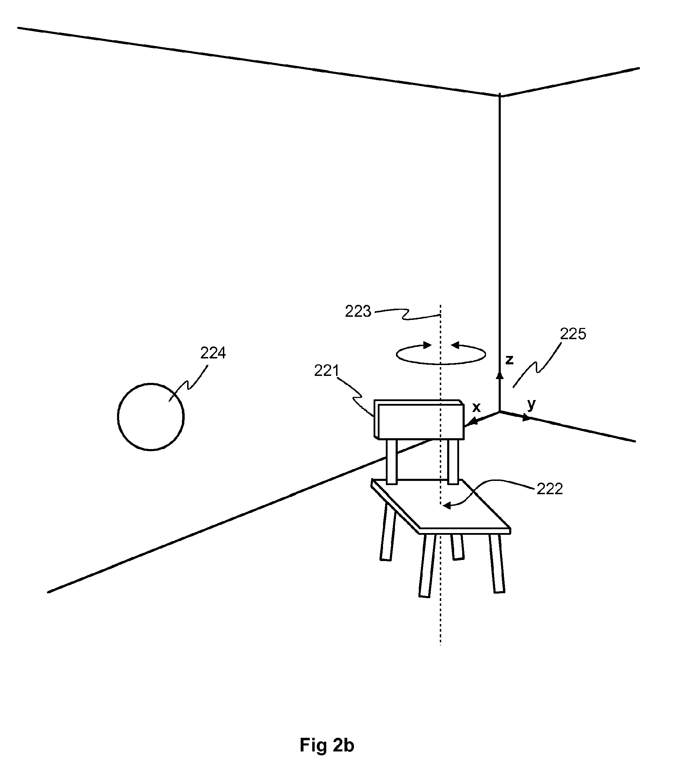

Fig. 2a shows a view image of a three-dimensional virtual space formed by apparatus according to an embodiment of the invention in an exemplary situation. In the situation shown in Fig. 2a, said three-dimensional virtual space is a virtual room with two virtual objects in it: a chair 221 and a ball 224. The system of coordinates 225 represents coordinates fixed to said virtual room. A real chair in a real room corresponding to said virtual room is generally moved only in the direction of a plane determined by the floor of said room and rotated only around a line that is perpendicular in relation to said floor. Thus it is not necessary to allow a virtual chair 221 in a virtual space to be moved in an unlimited manner in said virtual room. It is therefore advantageous to associate with the virtual chair 221 such a motion parameter or such motion parameters according to which the virtual chair 221 is allowed to be moved in the direction of the floor plane, or the xy plane of the coordinates 225, and rotated around a line 223 in the direction of the z axis of the coordinates 225, the line 223 being fixed to the virtual chair and running through point 222 of the virtual chair. A real ball in a real room corresponding to said virtual room can bounce in said real room in a very unlimited manner. On the other hand, if said real ball is of one color, said real ball would look the same even if it turned around its axis. It is therefore advantageous to associate with the virtual ball 224 such a moving parameter or such moving parameters according to which the virtual ball 224 is allowed to be moved in an unlimited manner in said virtual room, but the virtual ball is not allowed to be rotated. Fig. 2b shows said virtual room in a situation in which the virtual chair 221 has been moved in the direction of the floor plane of said virtual room, or the xy plane of the coordinates 225, and rotated around the line 223, as compared to the situation shown in Fig. 2a, and in which the virtual ball 224 has been shifted as compared to the situation shown in Fig. 2a.

In the apparatus according to an embodiment of the invention, one or more moving parameters can be used to indicate one or more of the following:
- the virtual object does not have allowed ways of moving, or
- rotating said virtual object around a line, which has a predetermined direction (e.g. the direction of gravitation) in said three-dimensional virtual space and runs through a predetermined point of said virtual object, is allowed, and/or
- rotating said virtual object around any line running through a predetermined point of said virtual object is allowed, and/or
- shifting said virtual object on a predetermined plane of said three-dimensional virtual space is allowed, and/or
- shifting said virtual object in a predetermined subspace of said three-dimensional virtual space is allowed, and/or
- unlimited shifting of said virtual object in said three-dimensional virtual space is allowed.

In the apparatus according to an embodiment of the invention, the processor system 101 (Fig. 1) is arranged to direct at least one operation to the virtual object according to what the at least one operation parameter associated with said virtual object is arranged to indicate as an operation that can be directed to the virtual object.

In the apparatus according to an embodiment of the invention, one or more operation parameters can be used to indicate one or more of the following:
- changing the color of the virtual object is allowed, and/or
- changing the patterning of the surface of said virtual object is allowed, and/or
- changing the size or one or more dimensions of said virtual object is allowed (e.g. flattening or stretching), and/or
- changing the handedness of said virtual object (such as inversion in relation to the centre line) is allowed, and/or
- making a copy of said virtual object and placing said copy in said three-dimensional virtual space is allowed, and/or
- an information request to said virtual object is allowed (for example, showing an opening of a virtual book in a separate window on the display screen 104, Fig. 1) and/or
- starting a service associated with said virtual object is allowed (e.g., sending real e-mail by using a virtual computer shown in the virtual space, or starting a real fan or other device connected to a communication network by controlling a corresponding virtual fan or other device in the virtual space), and/or
- presenting another three-dimensional virtual space associated with said virtual object is allowed (for example, moving to a virtual space representing the interior of the virtual object), and/or
- the animation of operation caused by a control measure directed to said virtual object is allowed (for example, a virtual lamp goes on or off as a response to a control measure directed to said virtual lamp, whereby the lighting conditions of the virtual space change).

In the apparatus according to an embodiment of the invention, the processor system 101 (Fig. 1) is arranged to update the view image to correspond to a situation in which the virtual observer has moved (shifted and/or rotated) in said three-dimensional virtual space.

In the apparatus according to an embodiment of the invention, the processor system 101 (Fig. 1) is arranged to move said virtual observer in said three-dimensional virtual space according to what at least one moving parameter associated with said virtual observer is arranged to indicate as the way of moving allowed for the virtual observer. Said moving of the virtual observer can be advantageously controlled by means of a mouse controller 105 and a joystick 106.

In the apparatus according to an embodiment of the invention, one or more motion parameters can be used to indicate one or more of the following:
- the virtual observer does not have allowed ways of moving, or
- said virtual observer's turning around its vertical axis in predetermined limits of turning angle is allowed, and/or
- said virtual observer's unlimited turning around its vertical axis is allowed, and/or
- said virtual observer's unlimited turning around an arbitrary line that runs through a predetermined point fixed to the virtual observer is allowed, and/or
- said virtual observer's shifting on a predetermined plane of said three-dimensional virtual space is allowed, and/or
- said virtual observer's shifting on a predetermined plane of said three-dimensional virtual space is allowed, and/or
- said virtual observer's shifting in a subspace of said three-dimensional virtual space, where the subspace is between two mutually parallel planes in said three-dimensional space, is allowed, and/or
- said virtual observer's shifting in a predetermined subspace of said three-dimensional virtual space is allowed, and/or
- said virtual observer's unlimited shifting in said three-dimensional virtual space is allowed.

In the apparatus according to an embodiment of the invention, the processor system 101 (Fig. 1) is arranged to move said virtual observer in relation to a certain virtual object in the three-dimensional virtual space according to what the at least one parameter of relations of motion associated with said virtual observer is arranged to indicate as the way of moving allowed for the virtual observer in relation to said virtual object.

In the apparatus according to an embodiment of the invention, one or more moving parameters can be used to indicate one or more of the following:
- the virtual observer does not have allowed ways of moving in relation to the virtual object (i.e. said virtual observer is, with regard to its location and position, fixed to said virtual object, such as a camera in a fixed installation to a car), or
- said virtual observer's turning in relation to said virtual object around the vertical axis of said virtual observer in predetermined limits of the turning angle (corresponding to the turning of the head and/or eyes of a person travelling in a vehicle) is allowed, and/or
- said virtual observer's unlimited turning in relation to said virtual object around the vertical axis of said virtual observer is allowed, and/or
- said virtual observer's unlimited turning around an arbitrary line in relation to said virtual object is allowed (corresponding to, for example, the turning of a skilful water skier being pulled behind a boat), and/or
- said virtual observer's shifting in said three-dimensional virtual space on a predetermined plane that is fixed to said virtual object is allowed, and/or
- said virtual observer's shifting in a subspace of said three-dimensional virtual space where the subspace is fixed to said virtual object is allowed, and/or
- said virtual observer's unlimited shifting in relation to said virtual object is allowed.

In the apparatus according to an embodiment of the invention, the processor system 101 (Fig. 1) is arranged to show on a display means 102 the reacting of the virtual object to the virtual observer in accordance with what the at least one reaction parameter associated with said virtual object is arranged to indicate as the way of reacting specified for said virtual object as a response to a predetermined operation of said virtual observer. Said way of reacting may be, for example:
- the changing of the color and/or patterning of the virtual object as a response to a situation in which, for example, the virtual observer touches said virtual object, in which case said virtual observer is also a virtual actor,
- the appearance of the virtual object in the view image as a response to a situation in which, for example, the virtual observer arrives at a predetermined distance from a place where said virtual object is specified to appear,
- the disappearance of the virtual object from the view image as a response to a situation in which, for example, the virtual observer arrives at a predetermined distance from said virtual object, and
- a predetermined movement of the virtual object as a response to a situation in which the virtual observer arrives at a predetermined distance from said virtual object.

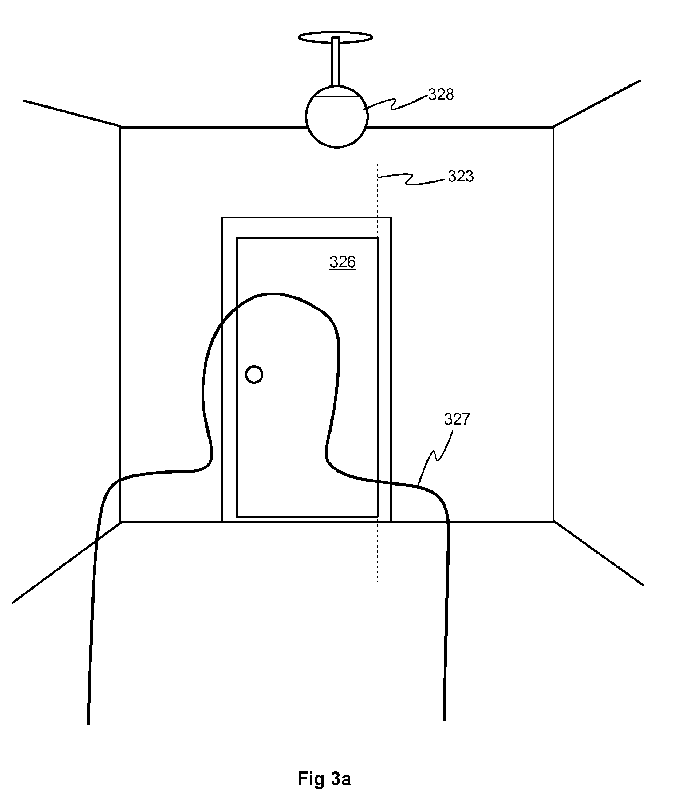

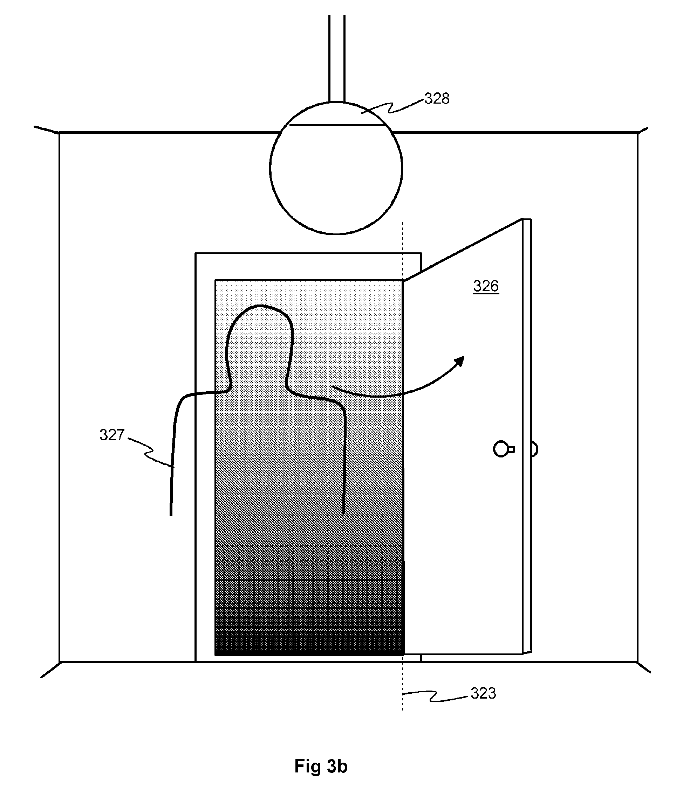

Fig. 3a shows a view image of a three-dimensional virtual space created by the apparatus according to an embodiment of the invention in an exemplary situation. In the situation shown in Fig. 3a, said three-dimensional virtual space is a virtual room with two virtual objects in it: a door 326 and a lamp 328. The virtual lamp 328 is a static virtual object, the moving of which is not allowed in said virtual room. The virtual door 326 is a virtual object, for which only rotating around the line 323 is allowed. Thus it is possible to associate the virtual door 326 with such a moving parameter according to which the rotating of the virtual door 326 counter-clockwise as seen from above, starting from the position shown by Fig. 3a, and back to the position shown by Fig. 3a is allowed, and such a reacting parameter according to which said virtual door 326 is rotated counter-clockwise as seen from above for the amount of a predetermined angle (e.g., 100 degrees), starting from the position shown by Fig. 3a, as a response to a situation in which the virtual observer arrives at a predetermined distance from said virtual door. Said virtual observer is shown as an outlined figure 327. Fig. 3b shows said virtual room in a situation in which the virtual observer 327 has arrived at said predetermined distance from said virtual door 326.

In the apparatus according to an embodiment of the invention, the processor system 101 (Fig. 1) is arranged to present the operation of the virtual object on a display means 102 according to what the at least one operation parameter associated with said virtual object is arranged to indicate as the predetermined operation of said virtual object. Said predetermined operation can be, for example, regular functions performed according to a predetermined schedule, or functions timed by a random number generator and performed at arbitrary moments of time. The functions may describe, for example, the changing of traffic lights, the changing position of the sun in relation to the horizon, or peoples' movement on a street.

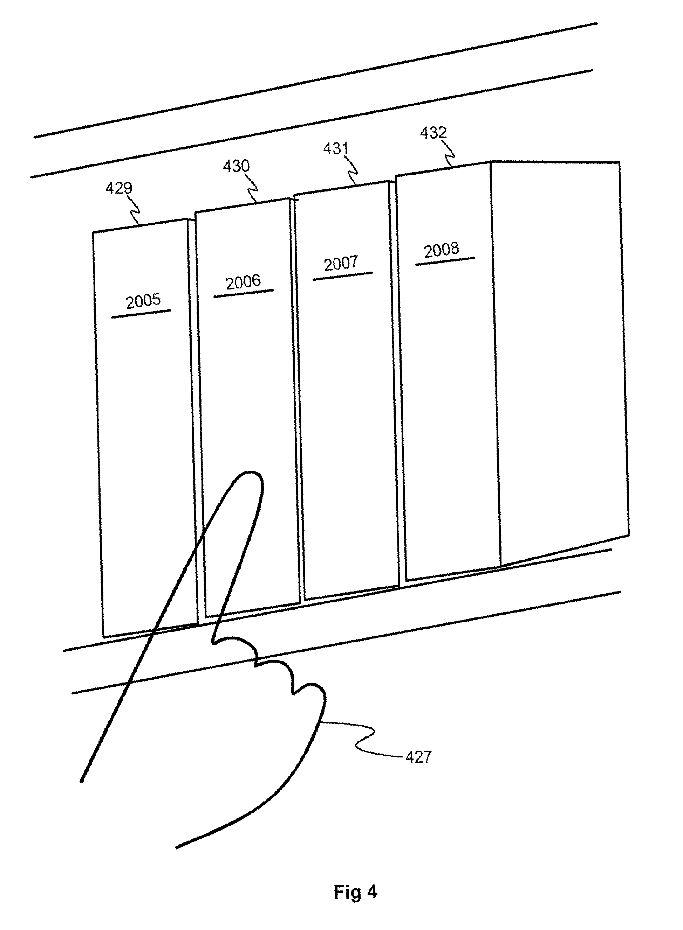

In the apparatus according to an embodiment of the invention, the processor system 101 (Fig. 1) is arranged to show on a display means 102 visual information which represents a part of the body of a virtual observer. Fig. 4 shows a view image of a three-dimensional virtual space formed by the apparatus according to an embodiment of the invention in an exemplary situation. Said view image shows a virtual bookshelf with virtual folders 429 - 432. The hand of a virtual observer is shown as an outline figure 427. The processor system 101 can be, for example, arranged to open a file represented by a virtual folder 429, 430, 431 or 423 e.g. to a separate window on the display screen 104, as a response to a situation in which a virtual hand 427 touches a folder, and a double-click of a button on a mouse controller 105 or other control measure is performed simultaneously.

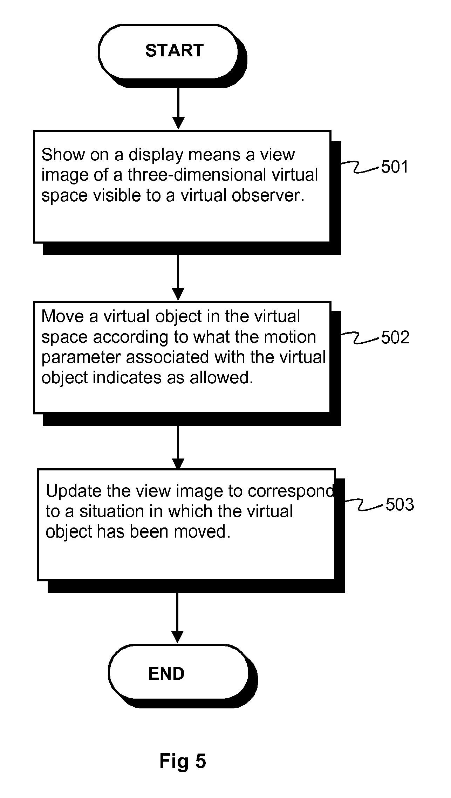

Fig. 5 shows a flow chart of a method according to an embodiment of the invention for creating a three-dimensional virtual space. In step 501, a view image of said three-dimensional virtual space visible to the virtual observer is shown by a display means. In step 502, at least one virtual object is moved in said three-dimensional virtual space in accordance with what the at least one moving parameter associated with said at least one virtual object is arranged to indicate as the way of moving allowed for said at least one virtual object. In step 503, said view image is updated to correspond to a situation in which said at least one virtual object has been moved in said three-dimensional virtual space.

The at least one moving parameter mentioned in the method according to an embodiment of the invention indicates one or more of the following:
- said virtual object does not have allowed ways of moving,
- rotating said virtual object around a line having a predetermined direction in said three-dimensional virtual space and running through a predetermined point of said virtual object, is allowed,
- rotating said virtual object around a line running through a predetermined point of said virtual object is allowed,
- shifting said virtual object on a predetermined plane of said three-dimensional virtual space is allowed,
- shifting said virtual object in a predetermined subspace of said three-dimensional virtual space is allowed, and
- unlimited moving of said virtual object in said three-dimensional virtual space is allowed.

In the method according to an embodiment of the invention, at least one operation is directed to said at least one virtual object according to what the at least one operation parameter associated with said at least one virtual object is arranged to indicate as an operation that can be directed to said at least one virtual object.

The at least one operation parameter mentioned in the method according to an embodiment of the invention indicates one or more of the following:
- changing the color of the virtual object is allowed,
- changing the patterning of the surface of said virtual object is allowed,
- changing the size or one or more dimensions of said virtual object is allowed,
- making a copy of said virtual object and placing said copy in said three-dimensional virtual space is allowed,
- an information request to said virtual object is allowed,
- starting a service associated with said virtual object is allowed,
- presenting another three-dimensional virtual space associated with said virtual object on said display means is allowed, and
- the animation of operation caused by an external control measure directed to said virtual object is allowed.

In the method according to an embodiment of the invention, said view image is updated to correspond to a situation in which said virtual observer has moved in said three-dimensional virtual space.

In the method according to an embodiment of the invention, said virtual observer is moved in said three-dimensional virtual space according to what the at least one moving parameter associated with said virtual observer is arranged to indicate as the way of moving allowed for said virtual observer.

The at least one moving parameter mentioned in the method according to an embodiment of the invention indicates one or more of the following:
- said virtual observer does not have allowed ways of moving,
- said virtual observer's turning around its vertical axis in predetermined limits of the turning angle is allowed,
- said virtual observer's unlimited turning around its vertical axis is allowed,
- said virtual observer's shifting on a predetermined plane of said three-dimensional virtual space is allowed,
- said virtual observer's shifting on a predetermined plane of said three-dimensional virtual space is allowed,
- said virtual observer's shifting in a subspace of said three-dimensional virtual space, the subspace being between two mutually parallel planes in said three-dimensional virtual space, is allowed,
- said virtual observer's shifting in a predetermined subspace of said three-dimensional virtual space is allowed, and
- said virtual observer's unlimited shifting in said three-dimensional virtual space is allowed.

In the method according to an embodiment of the invention, said virtual observer is moved in relation to said at least one virtual object in said three-dimensional virtual space according to what the at least one moving relation parameter associated with said virtual observer is arranged to indicate as the way of moving allowed for said virtual observer in relation to said virtual object.

The at least one moving relation parameter mentioned in the method according to an embodiment of the invention indicates one or more of the following:
- said virtual observer does not have allowed ways of moving in relation to said virtual object,
- said virtual observer's turning in relation to said virtual object around the vertical axis of said virtual observer in predetermined limits of the turning angle is allowed,
- said virtual observer's unlimited turning in relation to said virtual object around the vertical axis of said virtual observer is allowed,
- said virtual observer's shifting in said three-dimensional virtual space on a predetermined plane, which is fixed to said virtual object, is allowed,
- said virtual observer's shifting in a subspace of said three-dimensional virtual space, where said subspace is fixed to said virtual object, is allowed, and
- said virtual observer's unlimited shifting in relation to said virtual object is allowed.

In the method according to an embodiment of the invention, said display means is used to show the reaction of said at least one virtual object to said virtual observer according to what the at least one reacting parameter associated with said at least one virtual object is arranged to indicate as the way of reacting specified for said at least one virtual object as a response to the predetermined operation of the virtual observer.

In the method according to an embodiment of the invention, said display means is used to show the operation of said at least one virtual object according to what the at least one operation parameter associated with said at least one virtual object is arranged to indicate as the predetermined operation of said at least one virtual object.

In the method according to an embodiment of the invention, said display means is used to show visual information that presents a part of the body of said virtual observer.

A computer program according to an embodiment of the invention for creating a three-dimensional virtual space includes instructions executable by a programmable processor for directing said programmable processor:
- to present on a display means a view image of said three-dimensional virtual space visible to the virtual observer,
- to move at least one virtual object in said three-dimensional virtual space according to what the at least one moving parameter associated with said at least one virtual object is arranged to indicate as the way of moving allowed for said at least one virtual object, and
- to update said view image to correspond to a situation in which said at least one virtual object has been moved in said three-dimensional virtual space.

For example, the processor system 101 shown in Fig. 1 may be a programmable processor, which can be controlled by a computer program according to an embodiment of the invention.

The computer program according to an embodiment of the invention is saved in a storage medium readable by the processor, such as an optical disk (CD, Compact Disk) or RAM (Random Access Memory).

The computer program according to an embodiment of the invention is coded into a signal, which can be received from a communication network, such as the Internet.

As a person skilled in the art will readily appreciate, the invention and its embodiments are not limited to the above exemplary embodiments, but the invention and its embodiments can be modified within the scope of the independent claims. The expressions used in the claims that relate to the existence of characteristic features, such as "the apparatus includes a processor system" are open in such a way that presenting the characteristic features does not exclude the existence of other characteristic features that are not set forth in the independent claims.

## Claims

1. Apparatus for creating a three-dimensional virtual space, the apparatus including a processor system (101), which is arranged:
- to present on a display means (102) a view image of said three-dimensional virtual space visible to the virtual observer, and
- to update said view image to correspond to a situation in which at least one virtual object (221, 224, 326) located in said three-dimensional virtual space has been moved,
**characterized in that** said processor system is arranged to move said at least one virtual object in said three-dimensional virtual space according to what the at least one motion parameter associated with said at least one virtual object is arranged to indicate as the way of moving allowed for said at least one virtual object.

2. Apparatus according to Claim 1, **characterized in that** said at least one motion parameter is arranged to indicate one or more of the following:
- said virtual object does not have allowed ways of moving,
- rotating said virtual object around a line having a predetermined direction in said three-dimensional virtual space and running through a predetermined point of said virtual object is allowed,
- rotating said virtual object around a line running through a predetermined point of said virtual object is allowed,
- shifting said virtual object on a predetermined plane of said three-dimensional virtual space is allowed,
- shifting said virtual object in a predetermined subspace of said three-dimensional virtual space is allowed, and
- unlimited shifting of said virtual object in said three-dimensional virtual space is allowed.

3. Apparatus according to Claim 1, **characterized in that** said processor system is also arranged to direct at least one operation to said at least one virtual object according to what the at least one operation parameter associated with said at least one virtual object is arranged to indicate as an operation that can be directed to said at least one virtual object.

4. Apparatus according to Claim 3, **characterized in that** said at least one operation parameter is arranged to indicate one or more of the following:
- changing the color of said virtual object is allowed,
- changing the patterning of the surface of said virtual object is allowed,
- changing the size or one or more dimensions of said virtual object is allowed,
- making a copy of said virtual object and placing said copy in said three-dimensional virtual space is allowed,
- an information request to said virtual object is allowed,
- starting a service associated with said virtual object is allowed,
- showing another three-dimensional virtual space associated with said virtual object on said display means is allowed, and
- the animation of operation caused by an external control measure directed to said virtual object is allowed.

5. Apparatus according to Claim 1, **characterized in that** said processor system is also arranged to update said view image to correspond to a situation in which said virtual observer has moved in said three-dimensional virtual space.

6. Apparatus according to Claim 5, **characterized in that** said processor system is arranged to move said virtual observer in said three-dimensional virtual space according to what the at least one moving parameter associated with said virtual observer is arranged to indicate as the way of moving allowed for said virtual observer.

7. Apparatus according to Claim 6, **characterized in that** said at least one motion parameter is arranged to indicate one or more of the following:
- said virtual observer does not have allowed ways of moving,
- said virtual observer's turning around its vertical axis in predetermined limits of the turning angle is allowed,
- said virtual observer's unlimited turning around its vertical axis is allowed,
- said virtual observer's shifting on a predetermined plane of said three-dimensional virtual space is allowed,
- said virtual observer's shifting on a predetermined plane of said three-dimensional virtual space is allowed,
- said virtual observer's shifting in a subspace of said three-dimensional virtual space, which is between two mutually parallel planes in said three-dimensional virtual space, is allowed,
- said virtual observer's shifting in a predetermined subspace of said three-dimensional virtual space is allowed, and
- said virtual observer's unlimited shifting in said three-dimensional virtual space is allowed.

8. Apparatus according to Claim 5, **characterized in that** said processor system is arranged to move said virtual observer in relation to said at least one virtual object in said three-dimensional virtual space according to what the at least one parameter of relations of motion associated with said virtual observer is arranged to indicate as the way of moving allowed for said virtual observer in relation to said virtual object.

9. Apparatus according to Claim 8, **characterized in that** said at least one parameter of relations of motion is arranged to indicate one or more of the following:
- said virtual observer does not have allowed ways of moving in relation to said virtual object,
- said virtual observer's turning in relation to said virtual object around the vertical axis of said virtual observer in predetermined limits of the turning angle is allowed,
- said virtual observer's unlimited turning in relation to said virtual object around the vertical axis of said virtual observer is allowed,
- said virtual observer's shifting in said three-dimensional virtual space on a predetermined plane, which is fixed to said virtual object, is allowed,
- said virtual observer's moving in a subspace of said three-dimensional virtual space, where said subspace is fixed to said virtual object, is allowed, and
- said virtual observer's unlimited shifting in relation to said virtual object is allowed.

10. Apparatus according to Claim 5, **characterized in that** said processor system is arranged to present on said display means the reacting of said at least one virtual object to said virtual observer in accordance with what the at least one reaction parameter associated with said at least one virtual object is arranged to indicate as the way of reacting specified for said at least one virtual object as a response to the predetermined operation of said virtual observer.

11. Apparatus according to Claim 1, **characterized in that** said processor system is arranged to show on said display means the operation of said at least one virtual object according to what the at least one operation parameter associated with said at least one virtual object is arranged to indicate as the predetermined operation of said at least one virtual object.

12. Apparatus according to Claim 1, **characterized in that** said processor system is also arranged to present on said display means visual information, which shows a part of the body of said virtual observer.

13. A method for creating a three-dimensional virtual space, wherein:
- a view image of said three-dimensional virtual space visible to the virtual observer is shown (501) on a display means, and
- said view image is updated (503) to correspond to a situation in which at least one virtual object located in said three-dimensional virtual space has been moved,
**characterized in that** said at least one virtual object is moved (502) in said three-dimensional virtual space according to what the at least one motion parameter associated with said at least one virtual object is arranged to indicate as the way of moving allowed for said at least one virtual object.

14. A method according to Claim 13, **characterized in that** said at least one motion parameter indicates one or more of the following:
- said virtual object does not have allowed ways of moving,
- rotating said virtual object around a line having a predetermined direction in said three-dimensional virtual space and running through a predetermined point of said virtual object is allowed,
- rotating said virtual object around a line running through a predetermined point of said virtual object is allowed,
- shifting said virtual object on a predetermined plane of said three-dimensional virtual space is allowed,
- shifting said virtual object in a predetermined subspace of said three-dimensional virtual space is allowed, and
- unlimited shifting of said virtual object in said three-dimensional virtual space is allowed.

15. A method according to Claim 13, **characterized in that** at least one operation is directed to said at least one virtual object according to what the at least one operation parameter associated with said at least one virtual object is arranged to indicate as an operation that can be directed to said at least one virtual object.

16. A method according to Claim 15, **characterized in that** said at least one operation parameter indicates one or more of the following:
- changing the color of said virtual object is allowed,
- changing the patterning of the surface of said virtual object is allowed,
- changing the size or one or more dimensions of said virtual object is allowed,
- making a copy of said virtual object and placing said copy in said three-dimensional virtual space is allowed,
- an information request to said virtual object is allowed,
- starting a service associated with said virtual object is allowed,
- showing another three-dimensional virtual space associated with said virtual object on said display means is allowed, and
- the animation of operation caused by an external control measure directed to said virtual object is allowed.

17. A method according to Claim 13, **characterized in that** said view image is updated to correspond to a situation in which said virtual observer has moved in said three-dimensional virtual space.

18. A method according to Claim 17, **characterized in that** said virtual observer is moved in said three-dimensional virtual space according to what the at least one motion parameter associated with said virtual observer is arranged to indicate as the way of moving allowed for said virtual observer.

19. A method according to Claim 18, **characterized in that** said at least one motion parameter indicates one or more of the following:
- said virtual observer does not have allowed ways of moving,
- said virtual observer's turning around its vertical axis in predetermined limits of the turning angle is allowed,
- said virtual observer's unlimited turning around its vertical axis is allowed,
- said virtual observer's shifting on a predetermined plane of said three-dimensional virtual space is allowed,
- said virtual observer's shifting on a predetermined plane of said three-dimensional virtual space is allowed,
- said virtual observer's shifting in a subspace of said three-dimensional virtual space, where said subspace is between two mutually parallel planes in said three-dimensional virtual space, is allowed,
- said virtual observer's shifting in a predetermined subspace of said three-dimensional virtual space is allowed, and
- said virtual observer's unlimited shifting in said three-dimensional virtual space is allowed.

20. A method according to Claim 17, **characterized in that** said virtual observer is moved in relation to said at least one virtual object in said three-dimensional virtual space according to what the at least one parameter of relations of motion associated with said virtual observer is arranged to indicate as the way of moving allowed for said virtual observer in relation to said virtual object.

21. A method according to Claim 20, **characterized in that** said at least one parameter of relations of motion indicates one or more of the following:
- said virtual observer does not have allowed ways of moving in relation to said virtual object,
- said virtual observer's turning in relation to said virtual object around the vertical axis of said virtual observer in predetermined limits of the turning angle is allowed,
- said virtual observer's unlimited turning in relation to said virtual object around the vertical axis of said virtual observer is allowed,
- said virtual observer's shifting in said three-dimensional virtual space on a predetermined plane, which is fixed to said virtual object, is allowed,
- said virtual observer's shifting in a subspace of said three-dimensional virtual space, where said subspace is fixed to said virtual object, is allowed, and
- said virtual observer's unlimited shifting in relation to said virtual object is allowed.

22. A method according to Claim 17, **characterized in that** said display means is used to show the reaction of said at least one virtual object to said virtual observer according to what the at least one reaction parameter associated with said at least one virtual object is arranged to indicate as the way of reacting specified for said at least one virtual object as a response to the predetermined operation of said virtual observer.

23. A method according to Claim 13, **characterized in that** said display means is used to show the operation of said at least one virtual object according to what the at least one operation parameter associated with said at least one virtual object is arranged to indicate as the predetermined operation of said at least one virtual object.

24. A method according to Claim 13, **characterized in that** visual information that presents a part of the body of said virtual observer is shown on said display means.

25. A computer program for creating a three-dimensional virtual space, said computer program including instructions executable by a programmable processor for directing said programmable processor:
- to show on a display means a view image of said three-dimensional virtual space visible to a virtual observer, and
- to update said view image to correspond to a situation in which at least one virtual object located in said three-dimensional virtual space has been moved,
**characterized in that** the computer program includes instructions executable by said programmable processor for directing said programmable processor to move said at least one virtual object in said three-dimensional virtual space according to what the at least one motion parameter associated with said at least one virtual object is arranged to indicate as the way of moving allowed for said at least one virtual object.

26. A computer program according to Claim 25, **characterized in that** the computer program is stored in a memory medium.

27. A computer program according to Claim 25, **characterized in that** the computer program is coded into a signal, which can be received from a communication network.
